Europäisches Patentamt

European Patent Office

Office européen des brevets

(11) Veröffentlichungsnummer: **0 287 980 B1**

(12) **EUROPÄISCHE PATENTSCHRIFT**

(45) Veröffentlichungstag der Patentschrift: **19.02.92**

(21) Anmeldenummer: **88106116.2**

(22) Anmeldetag: **16.04.88**

(51) Int. Cl.⁵: **B65D 25/32**, B65D 43/06

(54) **Eimer und Deckel aus Kunststoff.**

(30) Priorität: **18.04.87 DE 8705705 U**
**04.11.87 DE 8714684 U**

(43) Veröffentlichungstag der Anmeldung:
**26.10.88 Patentblatt 88/43**

(45) Bekanntmachung des Hinweises auf die
Patenterteilung:
**19.02.92 Patentblatt 92/08**

(84) Benannte Vertragsstaaten:
**AT BE CH DE ES FR GB IT LI NL SE**

(56) Entgegenhaltungen:
**AU-B- 512 734**
**GB-A- 1 489 515**
**GB-A- 2 100 239**
**US-A- 4 335 827**

(73) Patentinhaber: **Jokey Plastik Wipperfürth
GmbH
August-Mittelsten-Scheid-Strasse 23
W-5272 Wipperfürth(DE)**

(72) Erfinder: **Drack, Alfred
Agathaberg 21
W-5272 Wipperfürth(DE)**

(74) Vertreter: **Stachow, Ernst-Walther, Prof. Dr. et
al
Dahlke, Lippert, Stachow & Tackenberg, P.O.
Box 30 02 08
W-5060 Bergisch Gladbach 1(DE)**

EP 0 287 980 B1

Rank Xerox (UK) Business Services

## Beschreibung

Die Erfindung betrifft einen Eimer aus Kunststoff mit einem Boden, einer sich von diesem zum oberen Rand hin konisch erweiternden Wand, deren oberer Rand zur tragenden und dichtenden Aufnahme eines Deckels ausgebildet ist, und zwei am äußeren Umfang der Wand, unterhalb des Randes und an diametral gegenüberliegenden Stellen angeordneten, mit je einem Loch versehenen Taschen zur Aufnahme eines Tragebügels, sowie ein diesem Eimer zugeordneter Deckel aus Kunststoff, wobei die Taschen Teil eines die Eimerwand konzentrisch umgebenden zylindrischen Ringes sind, der von einem in der Nähe des oberen Eimerrandes von diesem radial vorstehenden, ringscheibenförmigen Tragring getragen wird, der zylindrische Ring an seinem oberen Ende eine über den Umfang des Eimers verlaufende Ringwulst mit einer unteren Anschlagfläche aufweist, hinter die der Deckel beim Aufsetzen rastend greift, und der obere Rand des zylindrischen Ringes wenigstens an zwei diametral gegenüberliegenden Stellen des Eimerumfanges in Richtung auf den Eimerboden hin soweit heruntergezogen ist, daß dort das Untergreifen des Deckelrandes möglich ist.

Derartige Eimer mit Deckel sind in verschiedenen Ausführungen bekannt und sollen das eingefüllte körnige, pulverförmige, pastenförmige oder flüssige Gut sicher aufbewahren, gegen ungewollten Austritt dieses Gutes ebenso wie gegen Eintritt von Staub, Schmutz oder Feuchtigkeit schützen, mechanisch stabil sein und sich ohne besondere Werkzeuge öffnen und möglichst auch wieder dicht verschließen lassen.

Ein Eimer mit Deckel der eingangs genannten Art ist aus der US-A-4,335,827 bekannt. Der die Eimerwand konzentrisch umgebende zylindrische Ring weist an seinem oberen Rand mehrere über den Umfang gleichmäßig verteilte, rechteckige Ausnehmungen auf, die sich in Richtung auf den Eimerboden hin bis unter den Rand des Deckels erstrecken, so daß dort das Untergreifen des Deckelrandes möglich ist.

Bei einer maschinellen Stapelung der noch leeren Eimer ist es wünschenswert, diese in zirkularer Richtung so auszurichten, daß ihre Tragebügel sämtlich nach derselben Seite weisen, weil dann das Ergreifen und Abnehmen des obersten Eimers eines Stapels durch einen Greifer erleichtert oder erst möglich gemacht wird.

Dieser Gesichtspunkt ist bei dem aus der US-A-4,335,827 bekannten Eimer nicht beachtet.

Der Erfindung liegt die Aufgabe zugrunde, einen Eimer mit Deckel der eingangs genannten Art, wobei sich der Deckel eines verschlossenen Eimers leicht ergreifen und ohne ein besonderes Werkzeug abnehmen läßt, so auszubilden, daß bei ineinandergestapelten leeren Eimern ohne besonderen zusätzlichen Aufwand eine zirkulare Ausrichtung erreicht wird.

Die Aufgabe wird erfindungsgemäß dadurch gelöst, daß der gesamte zylindrische Ring an zwei diametral gegenüberliegenden Stellen des Eimerumfanges bogenförmig in Richtung auf den Eimerboden hin soweit heruntergezogen ist, daß dort ein Erfassen des Deckels möglich ist, und daß die bogenförmig heruntergezogenen Stellen des zylindrischen Ringes oberseitig und unterseitig durch Kreisbögen gleicher Radien begrenzt sind und dadurch eine zirkulare Ausrichtung ineinander gestapelter Eimer ohne Deckel gestatten.

Wenn leere Eimer dieser Art ineinandergestapelt werden, genügt jeweils eine maschinelle Verdrehung des eingesetzten obersten Eimers um einen verhältnismäßig geringen Winkelbetrag, um die unteren Kreisbögen seiner bogenförmig heruntergezogenen Stellen in Eingriff mit den oberen Kreisbögen des darunterliegenden Eimers gelangen zu lassen. Dabei ist eine exakte winkelmäßige Ausrichtung nicht erforderlich. Es genügt vielmehr, wenn der vorgenannte untere Kreisbogen auch nur zum Teil oberhalb des vorgenannten oberen Kreisbogens liegt, weil dann der eingesetzte obere Eimer in Folge seines Gewichts von selbst mit seinen unteren Kreisbögen voll in die aufnehmenden oberen Kreisbögen des darunterliegenden Eimers eingleitet.

In Weiterbildung der Erfindung ist ferner vorgesehen, daß an den beiden diametral gegenüberliegenden, bogenförmig heruntergezogenen Stellen des zylindrischen Ringes die zum Erfassen und Abnehmen des Deckels vorgesehenen, oberhalb der oberen Kreisbögen liegenden Ausnehmungen durch je einen radial dicht außerhalb des zylindrischen Ringes liegenden abreißbaren Steg verdeckt sind. Dieser Steg gestattet also ohne weiteres das vorerwähnte Stapeln leerer Eimer und deren zirkulare Ausrichtung, da die bogenförmig heruntergezogenen Stellen des jeweils oberen Eimers radial innerhalb des besagten Steges liegen und folglich nicht gehindert sind, in den bogenförmig heruntergezogenen Teil des nächsttieferen Eimers einzugreifen.

Diese Weiterbildung entspricht dem Wunsch, daß man deutlich erkennen kann, ob der Deckel bereits einmal unbefugt abgehoben und wieder aufgesetzt wurde. Bei einer solchen unbefugten Öffnung könnte das im Eimer befindliche Gut verunreinigt oder auch zum Teil entnommen worden sein.

Der besagte Steg stellt keinen besonderen Aufwand bei der Fertigung des Eimers dar und erhöht deshalb praktisch auch die Kosten des Eimers nicht.

Andererseits kann der Deckel eines gefüllten und verschlossenen Eimers nur dann abgehoben werden, wenn der vorgenannte Steg vorher abgerissen wird, was durch Sollbruchstellen an seinen beiden Enden erleichtert wird. Nach Abreißen des Steges kann aber sofort erkannt werden, daß der Eimer geöffnet wurde.

Die Erfindung wird nachstehend in Ausführungsbeispielen anhand der Zeichnung näher erläutert. Dabei zeigen:

Fig. 1 eine teilweise aufgebrochene Seitenansicht eines erfindungsgemäßen Eimers mit aufgesetztem Deckel;

Fig. 2 einen vergrößerten Teilschnitt längs der Linie II - II in Fig. 1;

Fig. 3 eine teilweise aufgebrochene Seitenteilansicht einer abgewandelten Ausführung, ähnlich der Darstellung in Fig. 1;

Fig. 4 eine vergrößerte Draufsicht in Richtung des Pfeiles IV in Fig. 3 auf einen Teil des Eimerrandes, bei abgenommenem Deckel;

Fig. 5 einen Schnitt längs des Kreisbogens V - V in Fig. 4 und

Fig. 6 einen vergrößerten Teilschnitt längs der Linie VI - VI in Fig. 3.

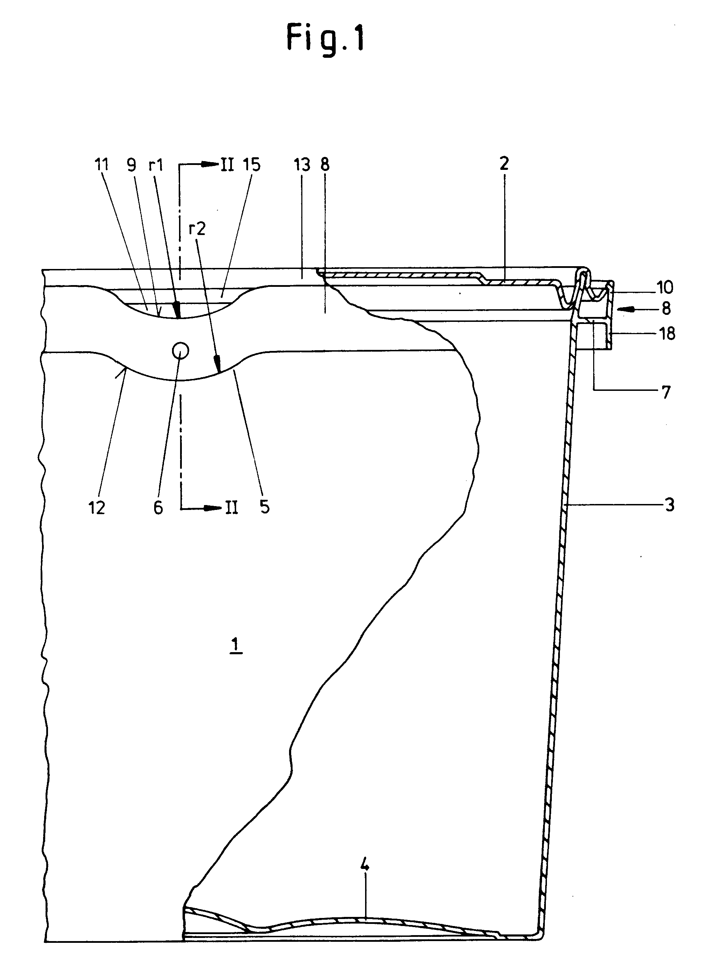

Der in Fig. 1 dargestellte Eimer 1 umfaßt einen Boden 4, eine von diesem vorstehende und sich zum oberen Rand hin konisch erweiternde Wand 3 und einen zur tragenden und dichtenden Aufnahme eines Deckels ausgebildeten oberen Rand. Die Eimerwand ist an ihrem oberen Rand konzentrisch von einem zylindrischen Ring 8 umgeben, der von einem in der Nähe des oberen Eimerrandes von diesem radial vorstehenden ringscheibenförmigen Tragring 7 getragen wird. Wie man dem linken Teil der Fig. 1 entnimmt, ist dieser zylindrische Ring an einer Stelle des Umfanges, nämlich bei 5, bogenförmig in Richtung auf den Eimerboden hin heruntergezogen. Diametral gegenüber dieser Stelle befindet sich eine ebensolche Herunterziehung.

Der heruntergezogene Teil 5 ist oberseitig durch einen Kreisbogen 9 mit einem Radius r1 und unterseitig durch einen Kreisbogen 12 mit Radius r2 begrenzt, wobei die beiden Radien gleich sind und um Ringbreite auseinanderliegen.

In jedem bogenförmig heruntergezogenen Teil des Randes ist eine Öffnung 6 zur Aufnahme des umgebogenen Endes eines Tragebügels vorgesehen.

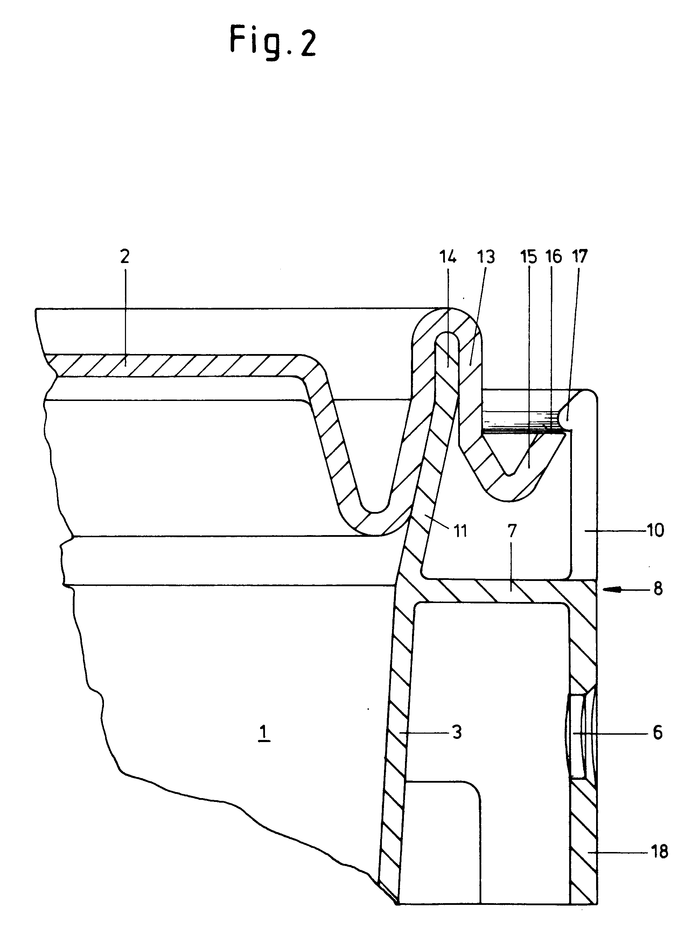

Auf dem Eimer 1 ist ein Deckel 2 aufgesetzt und verschließt den Eimer dicht. Der Verschluß ist noch deutlicher in der vergrößerten Darstellung der Figur 2 zu erkennen.

An das obere Ende der Wand 3 des Eimers, die eine Konizität von etwa 3˚ besitzt, schließt sich ein Stützteil 11 größerer Konizität, hier etwa 13˚, an. An diesen Stützteil schließt sich oberseitig ein zylindrischer Dichtteil 14 an.

An der Verbindungsstelle zwischen der leicht konischen Wand 3 und dem stärker konischen Stützteil 11 steht ein ringscheibenförmiger Tragring 7 in radialer Richtung auswärts vor, der einen zur Eimerwand konzentrischen, etwa zylindrischen Ring 8 trägt.

Der Ring 8 besitzt als Oberteil einen Schnappring 10, der im dargestellten Ausführungsbeispiel eine leicht konische Erweiterung von etwa 3˚ aufweist. Am oberen Ende dieses Schnappringes befindet sich eine über den Umfang des Eimers verlaufende Ringwulst 17 mit einer unteren, etwa radial einwärts verlaufenden Anschlagfläche und einer oberen schrägen Auflauffläche.

Der Deckel 2 besitzt radial außerhalb seines Mittelteils eine Ringfalte, an die sich ein im Schnitt U-förmig ausgebildeter Teil 13 anschließt, der nach dem Aufsetzen des Deckels den zylindrischen Dichtteil 14 des Eimers klemmend und dichtend umgreift.

An diesen U-förmigen Teil 13 schließt sich außerhalb des Stützteiles 11 des Eimers ein im Querschnitt V-förmiger Teil an. Der radial außen befindliche Teil 15 dieses V-förmigen Teils endet in einer radial verlaufenden Stirnfläche 16, die nach dem Aufsetzen des Deckels rastend hinter die untere Anschlagfläche der Ringwulst 17 greift und damit dem Abheben des Deckels einen gewissen Widerstand entgegensetzt.

Der zylindrische Ring 8 besitzt ferner einen zylindrischen Ringunterteil 18, der sich an der Verbindungsstelle des Tragringes 7 mit dem Schnappring 10 einstückig an diese anschließt.

An den beiden bogenförmig heruntergezogenen Stellen 5 des zylindrischen Ringes 8 kann man, wie den Figuren 1 und 2 zu entnehmen ist, unter den Haltering 15 des Deckels greifen, der an diesen heruntergezogenen Stellen freiliegt.

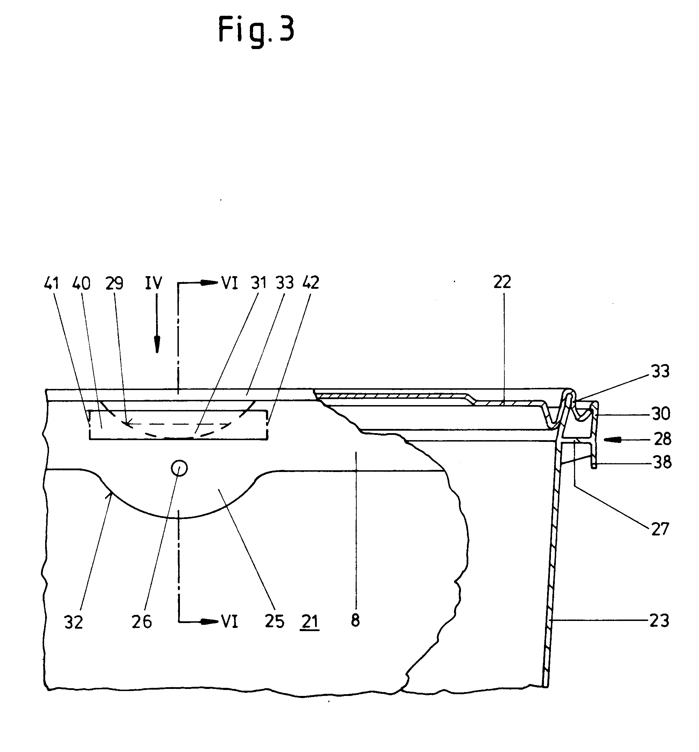

Bei der Ausführung nach den Figuren 3 bis 6 sind die Form des Eimers und des Deckels praktisch unverändert. Die oberen Einziehungen erstrecken sich lediglich etwas in den Tragesteg hinein und radial außerhalb derselben befindet sich ein abreißbarer Steg, was beides nachstehend näher erläutert wird.

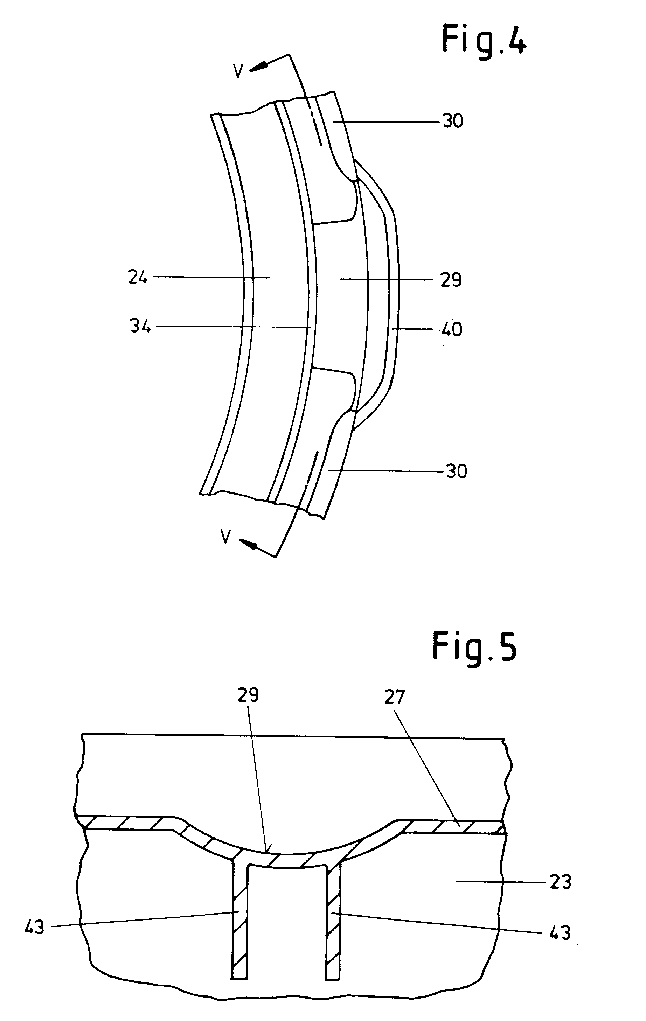

Der Eimer 21 besitzt hier wieder eine sich nach oben konisch leicht erweiternde Wand 23 und einen Bogen 24 (Fig. 4) sowie am oberen Rand einen zylindrischen Dichtteil 34, um den sich der entsprechend geformte Rand 33 eines Deckels 22 legen kann.

Dicht unterhalb des oberen Randes steht von der Eimerwand 23 radial auswärts ein ringscheibenförmiger Trageteil 27 vor, der einen die Eimerwand konzentrisch umgebenden zylindrischen Ring 28 trägt. Dieser Ring besteht aus einem oberen Schnappring 30 mit Ringwulst am oberen Ende und einem abwärts ragenden zylindrischen Ringteil 38.

Der zylindrische Ring 28 ist an zwei gegenüberliegenden Stellen des Deckelrandes bogenförmig heruntergezogen, wie aus Fig. 3 ersichtlich ist. Dort ist in dem zylindrischen Ring auch jeweils eine Öffnung 26 zur Aufnahme des jeweiligen Endes eines Tragebügels vorgesehen. Jede bogenförmig heruntergezogene Stelle 25 ist oberseitig durch einen Kreisbogen 29 und unterseitig durch einen Kreisbogen 32, die auch hier wieder gleichen Radius haben und um Ringbreite auseinanderliegen.

Quer über jede durch den oberen Kreisbogen 29 begrenzte Ausnehmung erstreckt sich ein rechteckiger Steg 40, der radial außerhalb des zylindrischen Ringes 28 angeordnet und an seinen beiden Enden mit diesem Ring verbunden ist. Dabei sind an den beiden Verbindungsstellen Sollbruchstellen 41 und 42 vorgesehen, die ein leichtes Abreißen des Steges ermöglichen.

Wie man sieht, verdeckt der Steg die Öffnung oberhalb des oberen Kreisbogens 29 und verhindert damit ein Eingreifen und Hochziehen des Deckels.

Sobald der Steg 40 jedoch abgerissen ist, erscheint in der Öffnung oberhalb des Kreisbogens 29 der Stützteil 31 als obere konische Verlängerung der Eimerwand 23, oberhalb dessen sich die Unterkante des V-förmig geformten Deckelrandes befindet. Der Deckel kann jetzt also abgezogen werden.

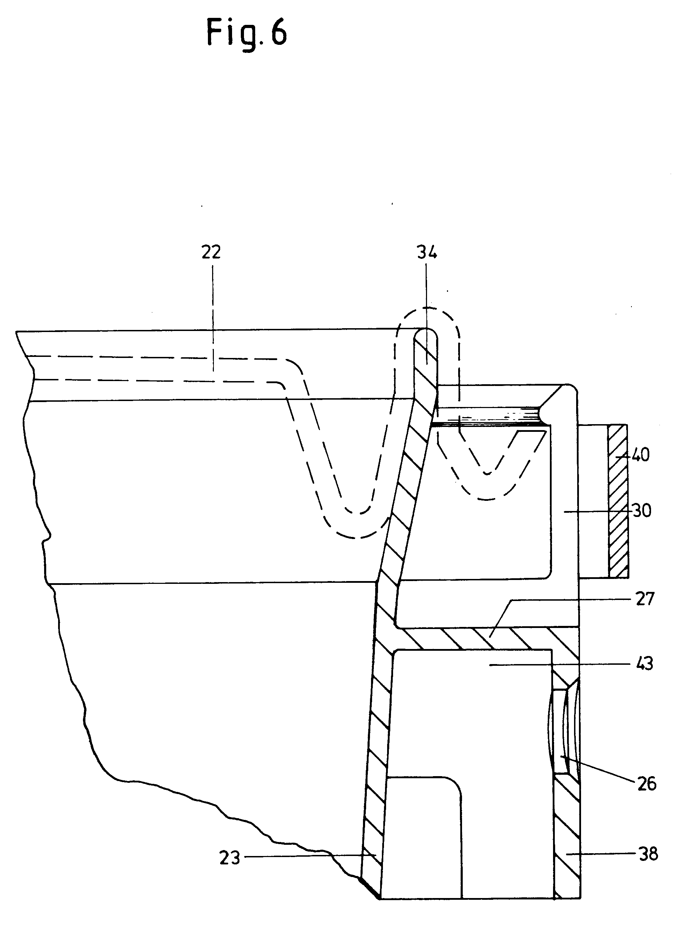

Wie man insbesondere den Figuren 4 und 6 entnehmen kann, hindert der Steg 40 vor seinem Abreißen nicht das Ineinanderschachteln leerer Eimer, weil dann jeweils der untere Kreisbogen 32 des obersten Eimers in den oberen Kreisbogen 29 des darunterliegenden Eimers eingreifen und damit eine Ausrichtung in zirkularer Richtung sicherstellen kann.

Die Darstellung in Fig. 5 zeigt dabei, wie der sonst ringscheibenförmige Tragring 27 an dieser Stelle ebenfalls bogenförmig heruntergezogen ist.

Da an diesen beiden heruntergezogenen Stellen die größte vertikale Belastung auftritt, einerseits beim Stapeln leerer Eimer übereinander und andererseits beim Tragen eines gefüllten Eimers mittels Tragebügels, wurden hier unterhalb des Tragerings 27, beiderseits der Öffnung 26, Rippen 43 vorgesehen, die den Tragring einerseits mit der Eimerwand 23 und andererseits mit dem Ringteil 38 verbinden.

## Patentansprüche

1. Eimer (1, 21) aus Kunststoff mit einem Boden (4, 24), einer sich von diesem zum oberen Rand hin konisch erweiternden Wand (3, 23), deren oberer Rand zur tragenden und dichtenden Aufnahme eines Deckels (2, 22) ausgebildet ist, und zwei am äußeren Umfang der Wand (3, 23), unterhalb des Randes und an diametral gegenüberliegenden Stellen angeordneten, mit je einem Loch (6, 26) versehenen Taschen zur Aufnahme eines Tragebügels, sowie ein diesem Eimer (1, 21) zugeordneter Deckel (2, 22) aus Kunststoff, wobei die Taschen Teil eines die Eimerwand (3, 23) konzentrisch umgebenden zylindrischen Ringes (8, 28) sind, der von einem in der Nähe des oberen Eimerrandes von diesem radial vorstehenden, ringscheibenförmigen Tragring (7, 27) getragen wird, der zylindrische Ring (8, 28) an seinem oberen Ende eine über den Umfang des Eimers (1, 21) verlaufende Ringwulst (17) mit einer unteren Anschlagfläche aufweist, hinter die der Deckel (2, 22) beim Aufsetzen rastend greift, und der obere Rand des zylindrischen Ringes (8, 28) wenigstens an zwei diametral gegenüberliegenden Stellen des Eimerumfanges in Richtung auf den Eimerboden (4, 4) hin soweit heruntergezogen ist, daß dort das Untergreifen des Deckelrandes möglich ist, **dadurch gekennzeichnet,** daß der gesamte zylindrische Ring (8, 28) an zwei diametral gegenüberliegenden Stellen des Eimerumfanges bogenförmig in Richtung auf den Eimerboden (4, 24) hin soweit heruntergezogen ist, daß dort ein Erfassen des Deckels (2, 22) möglich ist, und daß die bogenförmig heruntergezogenen Stellen (5, 25) des zylindrischen Ringes (8, 28) oberseitig (9, 29) und unterseitig (12, 32) durch Kreisbögen gleicher Radien (r1, r2) begrenzt sind und dadurch eine zirkulare Ausrichtung ineinander gestapelter Eimer ohne Deckel gestatten.

2. Eimer und Deckel nach Anspruch 1, **dadurch gekennzeichnet,** daß an den beiden diametral gegenüber liegenden, bogenförmig heruntergezogenen Stellen (25) des zylindrischen Ringes (28) die zum Erfassen und Abnehmen des Deckels vorgesehenen, oberhalb der oberen Kreisbögen (29) liegenden Ausnehmungen durch je einen radial dicht außerhalb des zylindrischen Ringes (28) liegenden abreißbaren Steg (40) verdeckt sind.

## Claims

1. A plastic pail (1, 21) having a base (4, 24), a wall (3, 23) widening conically from the latter towards the upper rim, the upper rim of which is constructed for the supporting and sealing reception of a lid (2, 22), and two pockets arranged at the outer circumference of the wall (3, 23), below the rim and at diametrically opposite points, and each provided with a hole (6, 26) to receive a carrying handle, and a plastic lid (2, 22) associated with said pail (1, 21), in which arrangement the pockets are part of a cylindrical ring (8, 28) concentrically enclosing the pail wall (3, 23), which is supported by an annular disc-shaped support ring (7, 27) which projects radially from the pail in proximity of its upper rim, the cylindrical ring (8, 28) at his top end is provided with an annular bead (17) which extends at the circumference of the pail (1, 21) and has a lower stop surface, behind which the lid (2, 22) catches and engages when placed into position, and the upper rim of the cylindrical ring (8, 28) is drawn down towards the pail base (4, 24) at least at two diametrical opposite points of the pail circumference sufficiently to permit the rim of the lid to be gripped there, characterized in that the entire cylindrical ring (8, 28) is drawn down arcuately towards the pail base (4, 24) at two diametrically opposite points of the pail circumference sufficiently to permit the lid (2, 22) to be gripped there, and that the arcuately down-drawn points (5, 25) of the cylindrical ring (8, 28) are bounded on the upper side (9, 29) and on the lower side (12, 32) by arcs of equal radii (r1, r2) thereby permitting a circular alignment of nested pails without lids.

2. The pail and lid according to claim 1, characterized in that at both of the two diametrically opposite arcuately down-drawn points (25) of the cylindrical ring (28) the recesses located above the upper arcs (29) and provided for grasping and removing the lid are each covered by a tear-off bridge (40) located radially just outside the cylindrical ring (28).

**Revendications**

1. Seau (1, 21) en matière plastique, comportant un fond (4, 24), une paroi (3, 23), qui s'élargit en forme de cône depuis le fond vers le bord supérieur et dont le bord supérieur est réalisé avec une forme propre à l'emboîtement porteur et étanche d'un couvercle (2, 22), et deux poches qui sont disposées sur le pourtour extérieur de la paroi (3, 23), au-dessous du bord et en des points diamétralement opposés, et qui sont munies chacune d'un trou (6, 26) pour recevoir une anse de transport, ainsi qu'un couvercle (2, 22) en matière plastique associé à ce seau (1, 21), les poches faisant partie d'un anneau cylindrique (8, 28) qui entoure concentriquement la paroi (3, 23) du seau et qui est supporté par un cercle porteur (7, 27) en forme de disque annulaire, faisant saillie radialement sur le bord supérieur du seau à proximité de celui-ci, l'anneau cylindrique (8, 28) présentant, à son extrémité supérieure, un bourrelet annulaire (17) qui s'étend sur toute la circonférence du seau (1, 21), avec une surface de butée inférieure derrière laquelle s'enclenche le couvercle (2, 22) lorsqu'il est posé, et le bord supérieur de l'anneau cylindrique (8, 28) s'abaissant en direction du fond (4, 24) du seau, au moins en deux points diamétralement opposés, dans une mesure suffisante pour que le bord du couvercle puisse être saisi par-dessous à ces endroits, caractérisé en ce que, en deux points diamétralement opposés de la circonférence du seau, la totalité de l'anneau cylindrique (8, 28) s'abaisse en forme d'arc de cercle en direction du fond (4, 24) du seau, dans une mesure telle que le couvercle (2, 22) puisse être saisi à ces endroits, et en ce que les régions s'abaissant en arc de cercle (5, 25) de l'anneau cylindrique (8, 28) sont limitées du côté supérieur (9, 29) et du côté inférieur (12, 32) par des arcs de cercle de rayons égaux (r1, r2) et permettent ainsi une orientation circulaire de seaux empilés l'un dans l'autre sans couvercle.

2. Seau et couvercle selon la revendication 1, caractérisés en ce qu'aux deux endroits (25) de l'anneau cylindrique (28) qui s'abaissent en forme d'arc de cercle et sont diamétralement opposes, les creux situés au-dessus de l'arc de cercle supérieur (29) et prévus pour saisir et retirer le couvercle sont recouverts chacun par une barrette arrachable (40) qui se trouve juste à l'extérieur de l'anneau cylindrique (28) en direction radiale.

# Fig.1

# Fig.2

# Fig.3

41  40  29  IV  →VI  31  33  42                    22

33

30

28

38

27

23

32    26    →VI    25    21    8

# Fig.4

# Fig.5

# Fig.6